# FASCICULE DE BREVET EUROPEEN

(11) **EP 3 440 372 B1**
(45) Date de publication et mention de la délivrance du brevet: **15.07.2020**
(21) Numéro de dépôt: 17714788.1
(22) Date de dépôt: 03.04.2017
(51) Int. Cl.: F16D 55/226, B60T 13/74, F16D 125/40, F16D 121/24, F16D 125/06

(54) **ETRIER DE FREIN ELECTROMAGNETIQUE COMPRENANT UN GUIDAGE DE PISTON A FROTTEMENTS REDUITS**
ELEKTROMAGNETISCHER BREMSSATTEL MIT EINER KOLBENFÜHRUNG MIT VERRINGERTER REIBUNG
ELECTROMAGNETIC BRAKE CALIPER COMPRISING A REDUCED FRICTION PISTON GUIDE

(30) Priorité: 04.04.2016 FR 1652940
(43) Date de publication de la demande: 13.02.2019
(73) Titulaire: Foundation Brakes France, 93700 Drancy (FR)
(72) Inventeur: BOURLON, Philippe, 77230 Dammartin En Goele (FR); CUBIZOLLES, Cyril, 93700 Drancy (FR); AYACHE, Marc, 60600 Clermont De L'Oise (FR)
(74) Mandataire: Brevalex
(86) Numéro de dépôt international: PCT/EP2017/057800
(87) Numéro de publication internationale: WO 2017/174477

(56) Documents cités:
- FR-A1- 2 688 460
- US-A- 4 865 162

## Description

### DOMAINE TECHNIQUE

L'invention se rapporte à un frein à disque de véhicule automobile, de type électromécanique, c'est-à-dire comprenant un actionneur électromécanique pour presser une ou plusieurs plaquettes contre le disque afin de générer le freinage.

### ÉTAT DE LA TECHNIQUE ANTÉRIEURE

Plus particulièrement, l'invention se rapporte à un frein à disque comportant un disque chevauché par un étrier portant des plaquettes de friction et un piston pour presser ces plaquettes contre le disque ainsi qu'un actionneur électromécanique actionnant ce piston. En pratique, l'étrier comporte un corps d'étrier auquel l'actionneur électromécanique est rigidement fixé.

Le corps d'étrier inclut une base portant le piston et une plaquette poussée par ce piston, cette base étant prolongée par une voûte prolongée par des doigts portant une plaquette opposée, le disque du frein étant situé entre ces deux plaquettes.

Ce corps d'étrier est typiquement monté flottant en étant porté par un support pour être librement mobile en translation selon un axe principal orienté transversalement par rapport au véhicule équipé de cet étrier, et qui correspond à l'axe de révolution du disque et à l'axe de translation du piston.

La base comporte un logement dans lequel sont montés le piston et un mécanisme de transformation de mouvement pour provoquer une translation du piston sur rotation d'un organe de sortie de l'actionneur accouplé à ce mécanisme.

Ce logement est délimité par une face interne cylindrique dans laquelle le piston est monté coulissant. Compte tenu des efforts importants devant être supportés par le corps d'étrier, celui-ci est généralement une pièce issue de moulage de façon à présenter une rigidité élevée.

Pour que le coulissement du piston dans le logement de la base soit suffisamment précis, la face interne de cette base est usinée ou alésée après moulage du corps d'étrier, pour avoir un diamètre très proche du diamètre du piston.

Néanmoins, le guidage de ce piston peut induire des frottements importants qui sont préjudiciables à son bon fonctionnement, de sorte qu'il est nécessaire que l'alésage soit réalisé avec une très grande précision, ce qui augmente significativement le coût de fabrication d'un tel étrier.

Le document US 4 865 162 A montre un étrier de frein électromécanique d'après le préambule de la revendication 1.

Le but de l'invention est de trouver une solution pour réduire les frottements intervenant entre la base et le piston d'un tel étrier de frein électromagnétique à moindre coût.

### EXPOSÉ DE L'INVENTION

A cet effet, l'invention a pour objet un étrier de frein électromécanique de véhicule automobile, comprenant un corps d'étrier incluant une base portant un piston à face externe généralement cylindrique et un mécanisme de transformation de mouvement pour déplacer ce piston en translation selon une direction principale sur rotation d'un actionneur électromécanique couplé à ce mécanisme, cette base comprenant une face interne généralement cylindrique dans laquelle coulisse le piston selon l'axe principal, cet étrier comprenant au moins trois rouleaux cylindriques en acier interposés entre la face interne de la base et la face externe du piston, ces rouleaux étant orientés selon l'axe principal et répartis autour de cet axe, chaque rouleau étant logé dans une rainure formée à la face interne de la base, chaque rainure s'étendant parallèlement à l'axe principal en étant ouverte radialement vers l'axe principal, chaque cylindre dépassant de cette rainure vers l'axe principal.

Avec cet agencement, le piston est guidé par les rouleaux sans être en contact avec la face interne cylindrique, ce qui diminue significativement les efforts de frottement auxquels il est soumis du fait de la réduction significative des surfaces de contact nécessaires au guidage du piston.

L'invention concerne également un étrier ainsi défini, dans lequel chaque rouleau en acier est un rouleau de roulement à rouleaux.

L'invention concerne également un étrier ainsi défini, comprenant trois rouleaux cylindriques répartis à cent-vingt degrés autour de l'axe principal.

L'invention concerne également un étrier ainsi défini, dans lequel le piston comporte à sa face externe au moins une rainure orientée selon l'axe principal, et dans lequel au moins un rouleau est logé dans une rainure de la face interne et dans la rainure de la face externe du piston.

L'invention concerne également un étrier ainsi défini, dans lequel les rouleaux sont bloqués en translation dans les rainures de la face interne de la base par un joint annulaire engagé dans une gorge circonférentielle de la face interne de la base.

L'invention concerne également un frein de véhicule automobile comprenant un étrier tel que défini dans l'une des revendications précédentes.

### BRÈVE DESCRIPTION DES DESSINS

La figure 1 est une vue d'ensemble en perspective d'un corps d'étrier selon l'invention ;
La figure 2 est une vue en perspective et coupe selon un plan passant par l'axe de translation du piston montrant la base d'un corps d'étrier selon l'invention avec son logement et son piston ainsi que son mécanisme de transformation de mouvement;
La figure 3 est une vue partielle en section selon un plan passant par l'axe de translation du piston montrant la base d'un corps d'étrier selon l'invention avec son logement et son piston ainsi que son mécanisme de transformation de mouvement ;
La figure 4 est une vue en section transversale de la base avec son piston et son mécanisme.

### EXPOSÉ DÉTAILLÉ DE MODES DE RÉALISATION PARTICULIERS

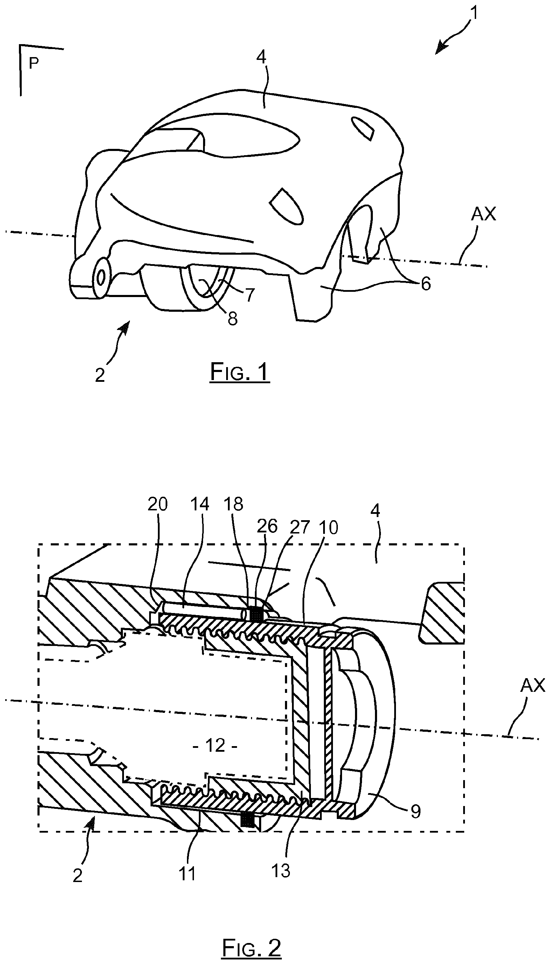

Le corps d'étrier de frein 1 qui est représenté sur la figure 1 comporte une base 2 prolongée par une voûte 4 prolongée par des doigts 6. La base 2 comporte un logement 7 dans lequel est engagé un piston mobile pour presser sur un disque de freinage une plaquette en étant mobile selon un axe principal AX.

Cette base 2 renferme encore dans la région arrière de son logement 7 un mécanisme de transformation de mouvement à liaison hélicoïdale, pour convertir un mouvement de rotation en un mouvement de translation du piston, ce qui correspond à convertir un moment de forces en un effort presseur.

L'idée à la base de l'invention est de placer à la face interne du logement des rouleaux en acier orientés selon l'axe principal AX pour guider le piston en translation sans qu'il ne soit en contact avec cette face interne. La surface de contact nécessaire au guidage est ainsi très réduite, ce qui permet de diminuer significativement les frottements.

Comme visible sur la figure 2, le piston 9 est engagé dans une portion du logement de la base 2 délimitée par une face interne 11 généralement cylindrique. Ce piston 9 est déplacé par un mécanisme de transformation de mouvement comprenant un réducteur 12 entraînant une calotte filetée 13 située dans le piston 9 en étant vissée dans un filetage intérieur de ce piston 9.

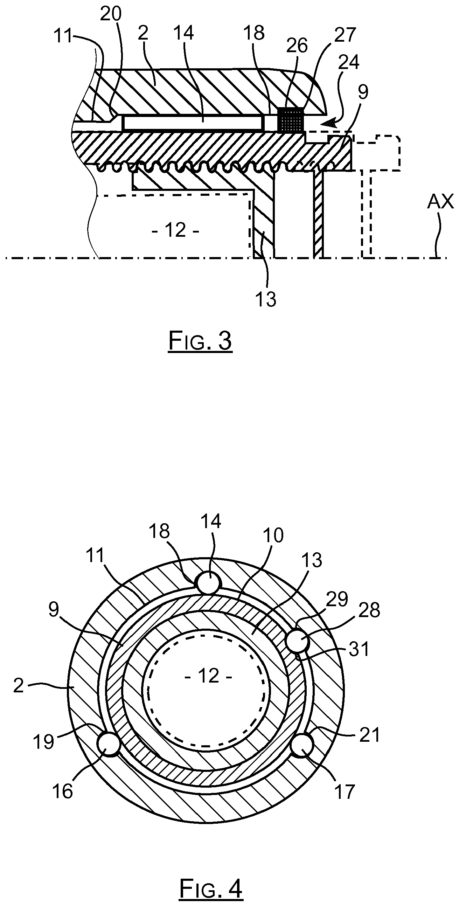

La face interne 11 de la base porte trois rouleaux en acier, dont un est visible sur les figures 2 et 3 en y étant repéré par 14, les deux autres rouleaux apparaissant sur la figure 4 où ils sont repérés par 16 et 17. Ces rouleaux en acier sont orientés parallèlement à l'axe AX en étant espacés de cent-vingt degrés les uns par rapport aux autres autour de cet axe, comme visible sur la figure 4. D'autres nombres de rouleaux et les angles d'espacement correspondants peuvent aussi être envisagés.

Ces rouleaux en acier 14, 16, 17 sont avantageusement des rouleaux de roulement à aiguille, de manière à présenter une conformité géométrique et un état de surface externe leur permettant d'assurer un guidage précis du piston 9 en translation selon l'axe AX avec un minimum de frottements.

Le rouleau 14 est logé dans une rainure 18 à section sensiblement hémicylindrique s'étendant parallèlement à l'axe AX, et qui est ouverte sur toute sa longueur vers cet axe AX, pour qu'une moitié du rouleau 14 se loge dans cette rainure 18.

Comme visible sur la figure 4, le rouleau 14 est logé dans la rainure 18, et il présente une génératrice, opposée à la rainure 18 qui est en appui sur la face externe 10 du piston 9 qui est elle aussi généralement cylindrique.

De manière analogue, les rouleaux 16 et 17 sont logés dans des rainures cylindriques correspondantes 19, 21 formées à la face interne 11 de la base pour avoir eux aussi chacun une génératrice en appui sur la face externe 19 du piston 9 de manière à le guider.

Le piston 9 est ainsi guidé en translation par rapport à la base 2 sans être en contact direct avec la face interne 11 de cette base 2. Il est guidé uniquement par les rouleaux qui présentent une surface de contact limitée permettant de réduire les efforts de guidage.

Le logement 7 dont une partie est délimitée par la surface interne généralement cylindrique 11 comporte une ouverture 19 débouchant en direction des doigts 6 de l'étrier pour recevoir le piston 9. Dans l'exemple des figures, le corps d'étrier est moulé de telle sorte que les rainures 18, 19 et 21 ont une extrémité fermée du côté opposé à l'ouverture 19 et une extrémité ouverte, c'est-à-dire débouchant avec cette ouverture 19 en direction des doigts 6. L'extrémité de la rainure 18 qui est fermée est repérée par 22 sur les figures 2 et 3.

La surface interne 11 comporte au voisinage de son ouverture débouchante 24 une gorge circonférentielle intérieure 26 de section carrée et ayant une profondeur supérieure à la profondeur des rainures 18, 19, 21, pour recevoir un joint 27 qui est ici un joint annulaire à section carrée.

Comme visible sur les figures 2 et 3, lorsque ce joint annulaire 27 est en place dans sa gorge circonférentielle 26, il obture la section de chaque rainure 18, 19, 21 pour fermer les extrémités de ces rainures situées près de l'ouverture 19.

Dans ces conditions, le rouleau 14 est logé radialement dans la rainure 18 est bloqué le long de l'axe AX entre d'une part le joint annulaire 27 et d'autre part l'extrémité opposée 22 de cette rainure qui est fermée de par sa forme telle que directement issue du moulage du corps d'étrier.

Ce joint annulaire à section carrée 27 a par ailleurs sa face interne qui est en appui sur la face externe du piston, de sorte qu'il constitue une barrière interposée entre la face externe du piston 9 et la face interne 11 de la base 2, qui permet d'éviter l'entrée de poussières et salissures dans l'espace séparant ces faces.

Dans l'exemple de la figure 4, le corps d'étrier comporte un rouleau additionnel 28 orienté selon l'axe AX, et qui est logé conjointement dans une rainure 29 de la face interne 11 et dans une rainure 31 de la face externe 19 du piston 9 de manière à interdire une rotation de ce piston autour de l'axe AX lorsqu'il subit un couple appliqué par le réducteur 12 et la calotte 13.

Dans l'exemple de la figure 4 c'est un rouleau additionnel 28 qui est spécifiquement destiné au blocage en rotation, mais l'un ou plusieurs des rouleaux assurant de guidage du piston peuvent assurer également le blocage en rotation de ce piston.

### Nomenclature

1 : corps d'étrier de frein
2 : base
4 : voûte
6 : doigts
7 : logement
9 : piston
10 : face externe
11 : face interne
12 : réducteur
13 : calotte filetée
14 : rouleau
16 : rouleau
17 : rouleau
18 : rainure
19 : rainure
21 : rainure
22 : extrémité
24 : ouverture
26 : gorge
27 : joint annulaire
28 : rouleau additionnel
29 : rainure
31 : rainure

## Revendications

1. Etrier de frein électromécanique de véhicule automobile, comprenant un corps d'étrier (3) incluant une base (2) portant un piston (9) à face externe (10) généralement cylindrique et un mécanisme de transformation de mouvement (12, 13) pour déplacer ce piston (9) en translation selon une direction principale (AX) sur rotation d'un actionneur électromécanique couplé à ce mécanisme, cette base (2) comprenant une face interne (11) généralement cylindrique dans laquelle coulisse le piston (9) selon l'axe principal (AX), **caractérisé en ce que** cet étrier comprend au moins trois rouleaux cylindriques en acier (14, 16, 17) interposés entre la face interne (11) de la base (2) et la face externe (10) du piston (9), ces rouleaux (14, 16, 17) étant orientés selon l'axe principal (AX) et répartis autour de cet axe, chaque rouleau (14, 16, 17) étant logé dans une rainure (18, 19, 21) formée à la face interne (11) de la base (2), chaque rainure (18, 19, 21) s'étendant parallèlement à l'axe principal (AX) en étant ouverte radialement vers l'axe principal (AX), chaque cylindre (14, 16, 17) dépassant de cette rainure (18, 19, 21) vers l'axe principal (AX).

2. Etrier selon la revendication 1, dans lequel chaque rouleau en acier (14, 16, 17) est un rouleau de roulement à rouleaux.

3. Etrier selon la revendication 1 ou 2, comprenant trois rouleaux cylindriques (14, 16, 17) répartis à cent-vingt degrés autour de l'axe principal (AX).

4. Etrier selon l'une des revendications 1 à 3, dans lequel le piston (9) comporte à sa face externe (10) au moins une rainure (29) orientée selon l'axe principal (AX), et dans lequel au moins un rouleau (28) est logé dans une rainure (29) de la face interne (11) et dans la rainure (31) de la face externe (10) du piston.

5. Etrier selon l'une des revendications précédentes, dans lequel les rouleaux (14, 17, 18) sont bloqués en translation dans les rainures (18, 19, 21) de la face interne de la base par un joint annulaire (27) engagé dans une gorge circonférentielle (26) de la face interne (11) de la base (2).

6. Frein de véhicule automobile comprenant un étrier tel que défini dans l'une des revendications précédentes.

## Patentansprüche

1. Elektromechanischer Bremssattel für ein Kraftfahrzeug, mit einem Sattelkörper (1), der eine Basis (2), die einen Kolben (9) mit einer allgemein zylindrischen Außenfläche (10) und einen Bewegungsumwandlungsmechanismus (12, 13) trägt, zum Verschieben des Kolbens (9) in einer Translationsbewegung entlang einer Hauptrichtung (AX) bei Drehung eines mit dem Mechanismus gekoppelten elektromechanischen Stellantriebs, wobei die Basis (2) eine allgemein zylindrische Innenfläche (11) aufweist, in der der Kolben (9) entlang der Hauptachse (AX) gleitet, wobei der Sattel **dadurch gekennzeichnet ist, dass** er mindestens drei zylindrische Rollen aus Stahl (14,16,17) aufweist, die zwischen der Innenfläche (11) der Basis (2) und der Außenfläche (10) des Kolbens (9) angeordnet sind, wobei die Rollen (14,16,17) entlang der Hauptachse (AX) ausgerichtet und um diese Achse herum verteilt sind, wobei jede Rolle (14,16,17) in einer Nut (18,19,21) aufgenommen ist, die an der Innenfläche (11) der Basis (2) ausgebildet ist, wobei jede Nut (18,19,21) sich parallel zu der Hauptachse (AX) erstreckt und radial zur Hauptachse (AX) hin offen ist, wobei jeder Zylinder (14,16,17) von der Nut (18,19,21) zur Hauptachse (AX) hin vorsteht.

2. Sattel nach Anspruch 1, wobei jede Rolle aus Stahl (14,16,17) eine Rollenlagerrolle ist.

3. Sattel nach Anspruch 1 oder 2, mit drei zylindrischen Rollen (14,16,17), die in einem Winkel von einhundertzwanzig Grad um die Hauptachse (AX) verteilt sind.

4. Sattel nach einem der Ansprüche 1 bis 3, wobei der Kolben (9) an seiner Außenfläche (10) mindestens eine entlang der Hauptachse (AX) ausgerichtete Nut (29) aufweist, und bei dem mindestens eine Rolle (28) in einer Nut (29) der Innenfläche (11) und in der Nut (31) der Außenfläche (10) des Kolbens aufgenommen ist.

5. Sattel nach einem der vorstehenden Ansprüche, bei dem die Rollen (14,16,17) in den Nuten (14,16,17) der Innenfläche der Basis durch eine ringförmige Dichtung (27), die in eine Umfangsrille (26) der Innenfläche (11) der Basis (2) eingreift, gegen Verschiebung gesichert sind.

6. Kraftfahrzeugbremse mit einem Sattel gemäß einem der vorstehenden Ansprüche.

## Claims

1. Electromechanical brake calliper, comprising a calliper body (1) including a base (2) supporting a piston (9) with a generally cylindrical outer face (10) and a mechanism for transforming movement (12, 13) to move this piston (9) in translation along a main direction (AX) on rotation of an electromechanical actuator coupled with this mechanism, this base (2) comprising a generally cylindrical inner face (11) wherein the piston (9) slides along the main axis (AX), **characterized in that** this calliper comprises at least three cylindrical steel rollers (14, 16, 17) interposed between the inner face (11) of the base (2) and the outer face (10) of the piston (9), these rollers (14, 16, 17) being oriented along the main axis (AX) and distributed around this axis, each roller (14, 16, 17) being housed in a groove (18, 19, 21) formed on the inner face (11) of the base (2), each groove (18, 19, 21) extending parallel to the main axis (AX) by being radially opened towards the main axis (AX), each cylinder (14, 16, 17) exceeding this groove (18, 19, 21) towards the main axis (AX).

2. Calliper according to claim 1, wherein each steel roller (14, 16, 17) is a roller bearing roller.

3. Calliper according to claim 1, comprising three cylindrical rollers (14, 16, 17) distributed at one hundred and twenty degrees around the main axis (AX).

4. Calliper according to claim 1, wherein the piston (9) comprises, on the outer face (10) thereof, at least one groove (29) oriented along the main axis (AX), and wherein at least one roller (28) is housed in a groove (29) of the inner face (11) and in the groove (31) of the outer face (10) of the piston.

5. Calliper according to claim 1, wherein the rollers (14, 16, 17) are blocked in translation in the grooves (14, 16, 17) of the inner face of the base by a ring seal (27) engaged in a circumferential groove (26) of the inner face (11) of the base (2).

6. Motor vehicle brake comprising a calliper such as defined in claim1.
